Europäisches Patentamt

European Patent Office

Office européen des brevets

(11) Publication number: **0 388 067 B1**

# EUROPEAN PATENT SPECIFICATION

(45) Date of publication of patent specification: **20.07.94**　(51) Int. Cl.⁵: **G10L 5/06**, G10L 3/00

(21) Application number: **90302404.0**

(22) Date of filing: **07.03.90**

(54) **Speech recognition system.**

(30) Priority: **13.03.89 JP 57760/89**

(43) Date of publication of application:
**19.09.90 Bulletin 90/38**

(45) Publication of the grant of the patent:
**20.07.94 Bulletin 94/29**

(84) Designated Contracting States:
**DE FR GB**

(56) References cited:

**IEEE INTERNATIONAL CONFERENCE ON ACOUSTICS, SPEECH AND SIGNAL PROCESSING, Tokyo, 7th - 11th April 1986, vol. 4, pages 2679-2682, IEEE, New York, US; O. WATANUKI et al.: "Speaker independent isolated word recognition using label histograms"**

**IEEE INTERNATIONAL CONFERENCE ON ACOUSTICS, SPEECH AND SIGNAL PROCESSING, New York, 11th - 14th April 1988, vol. 1, pages 207-210, IEEE, New York, US; M. NISHIMURA et al.: "Speaker adaptation method for HMM-based speech recognition"**

(73) Proprietor: **International Business Machines Corporation**
**Old Orchard Road**
**Armonk, N.Y. 10504(US)**

(72) Inventor: **Nishimura, Masafumi**
**Denen Domiiru 405,**
**3-29-2 Shinishikawa,**
**Midori-ku**
**Yokohama-shi, Kanagawa-ken(JP)**

(74) Representative: **Atchley, Martin John Waldegrave**
**IBM United Kingdom Limited**
**Intellectual Property Department**
**Hursley Park**
**Winchester Hampshire SO21 2JN (GB)**

IEEE INTERNATIONAL CONFERENCE ON ACOUSTICS, SPEECH AND SIGNAL PROCESSING, Toyko, 7th - 11th April 1986, vol. 4, pages 2643-2646, IEEE, New York, US; K. SHIKANO et al.: "Speaker adaptation through vector quantization"

IEEE INTERNATIONAL CONFERENCE ON ACOUSTICS, SPEECH AND SIGNAL PROCESSING, Tokyo, 7th - 11th April 1986, vol. 4, pages 2667-2670, IEEE, New York, US; K. SUGAWARA et al.: "Speaker adaptation for a hidden Markov model"

## Description

The present invention relates to a speech recognition system using Phenonic Markov models and more particularly to such a system which is to adapt its vector quantization code book easily and with high accuracy.

A speech recognition system using Markov models recognizes input speech from the view point of probability. For example, in one such system the speech feature is divided into time periods (called "frames") and each time period is subjected to a frequency analysis and then to a vector quantization, and is then converted into a label (symbol) train. One Markov model is set for each label. On the basis of the label train of the input speech to be recognised such a Markov model train (word baseform) is given for each word. A plurality of states and transitions between the respective Markov models are specified. The probability of the transition being produced is assigned to each transition and the probability of a label output occurring in the state or transition is assigned to each state or transition. Unknown input speech is converted into the label train. The probability of producing this label train by the respective word Markov models specified by the word baseform is determined based upon the foregoing transition producing probability and label output probability (called "parameters" hereinafter) and the word Markov model giving the maximum label producing probability is determined. The recognition is then performed based upon this result.

Such a Markov model for each label unit is called a "Phenonic Markov model". The model made to correspond by the same label is treated as the common model at the time of the learning and recognition of the model. The details of Phenonic Markov models are given in the following literature:

(1) "Acoustic Markov Models Used in the Tangora Speech Recognition System" (Proceedings of ICASSP'88, 1988, April, S11-3, L.R.Bahl, P.F. Brown, P.V. de Souza, R.L. Mercer and M.A. Picheny).

In a speech recognition system using the foregoing Markov model, a large amount of input speech data is required for the preparation of the code book of the vector quantization, the estimation of the Markov model and the registration of the word baseform, and much time is also required for performing these operations. Many systems which have been prepared using the speech data of predetermined speakers do not give sufficient recognition accuracy for the speech from other speakers. The recognition accuracy is degraded when the environment becomes different due to the lapse of a relatively long time, even for the same speaker. There is also a problem because the recognition accuracy may become degraded due to the presence of environmental noise.

In document (1) above, although the learning time is greatly reduced by preparing the word baseforms with the predetermined speaker utterances, it still requires a large amount of speech data and much process time since the quantization code book and the parameters of the Markov model are re-evaluated for each speaker.

Recently, in order to solve the problems it has been proposed that the vector quantization code book and the Markov model for the predetermined speaker should be adapted to different speakers and circumstances. The methods of adapting the vector quantization code book may be divided into the following two types.

The first is to determine the correspondence between the learning utterance and the predetermined speaker utterance by data processing matching, and to adapt the code book using it. This is disclosed in:

(2) "Speaker adaptation by vector quantization", Electronics and Communication Institute Technical Research Report, SP-86-65, 1906, December pp. 33 - 40, by Kiyohiro Shikano.

However, it is impossible to determine the correspondence exactly by this method when the distribution of the feature quantity changes greatly. Furthermore, it does not necessarily give the same evaluation as that on the Markov model because the correspondence is based upon the distance. It also results in degraded efficiency in the use of memory capacity, since data processing capacity is required in addition to the Markov model.

The second method does not use the correspondence to the time axis, but prepares the adapted code book by clustering the learning speech with reference to one original code book. Such a method is described in:

(3) "Speaker adaptation method without a teacher based upon clustering of spectrum space". (Japanese Acoustic Institute, Proceeding of Spring National meeting of Showa 63, 1988 March, 2-2-16, by Sadaoki Furui.

(4) "Speaker Adaptation Method for HMM-Based speech Recognition", (Proceedings of ICASSP'88, 1988, April, S5-7, by M. Nishimura and K. Sugawara).

These methods require a large amount of calculation and memory capacity, and may not provide a highly accurate adaptation since all correspondences on the time axis are neglected.

In addition, the reference (4) discloses the adaptation method of the Markov model parameters.

The object of the present invention is to provide a speech recognition system capable of adaptation without difficulty even with drastic changes in the feature quantity, and capable of maintaining the correspondence between the labels.

The present invention relates to a speech recognition system comprising means for performing a frequency analysis of an input speech in a succession of time periods to obtain feature vectors, means for producing a corresponding label train using a vector quantization code book, means for matching a plurality of word baseforms, expressed by a train of Markov models each corresponding to labels, with the label train, means for recognizing the input speech on the basis of the matching result, and means for performing an adaptation operation on the system to improve its ability to recognise speech.

According to the invention the speech recognition system is characterised in that the means for performing an adaptation operation comprises

means for dividing each of a plurality of input speech words into N segments (N being an integer number greater than or equal to 1) and producing a representative value of the feature vector of each segment of each input speech word,

means for dividing into segments word baseforms each corresponding to one of the input speech words and for producing a representative value of each segment feature vector of each word baseform on the basis of a prototype vector of the vector quantization code book,

means for producing a movement vector indicating the distance between a representative value of each segment of each input speech word and a representative value of the corresponding segment of the corresponding word baseform,

means for developing the degree of relation between each segment of each input speech word and each label in the label group of the vector quantization code book based upon:

$$P(L_k\ i,j) = \Sigma P(L_k\ M_1) \bullet P(M_1\ i,j)$$

where $P(L_k\ i,j)$ is the degree of relation between the segment j of the input speech word for the word i and the label $L_k$ in the label group of the vector quantization code book; $P(L_k\ M_1)$ is the output probability of the label $L_k$ in Markov model $M_1$; and $P(M_1\ i,j)$ is the producing probability of Markov model $M_1$, in the segment j of the word i,

means for storing the degree of relation between each segment of each input speech word and each label in a label group of the vector quantization code book,

prototype adaptation means for correcting a prototype vector of each label in the label group of the vector quantization code book by each movement vector in accordance with the degree of relation between the label and tile movement vector, and

means in said prototype adaptation means for developing each label prototype vector in a label group of the vector quantization code book based upon:

$$F_k' = F_k + \sum_{i}\sum_{j}^{WN} P(i,j\ L_k) \cdot (S_{ij} - B_{ij})$$

where $F_k$, is a prototype vector before the correction of the label $L_k$; $F_k'$ is a prototype vector after the correction of the label $L_k$; $S_{ij}$ is a representative value of the feature vector in the segment j of the word input speech for the word i; and $B_{ij}$ is a representative vector in the segment j of the word baseform for the word i.

In order that the invention may be more readily understood, an embodiment will now be described with reference to the accompanying drawings in which:

Figure 1 is a drawing explaining the operation of a speech recognition system,

Figure 2 is a block diagram of the speech recognition system illustrated in Figure 1,

Figure 3 is a flow chart for explaining the operation of the labelling device 8 in the system illustrated in Figure 2,

Figure 4 is a flow chart for explaining the operation of the vector quantization code book adaptation device in the system illustrated in Figure 2, and

Figure 5 is a drawing illustrating the experimental data of the application results of the speech recognition system illustrated in Figure 1.

4

The present invention relates to a speech recognition system in which word speech used for adaptation of the speech recognition system is first subjected to frequency analysis for each of a series of predetermined time periods to generate a train of feature vectors. Next, the feature vector train is divided into N (1<=N) segments on a time axis. A word baseform obtained in advance for speech from a certain speaker is likewise divided into N segments, preferably evenly divided, and then correspondence between each segment of the feature vector train and each segment of the word baseform is determined. The baseform can be treated as a feature vector train by reference to a vector quantization code book, so that the differential between a representative feature vector (preferably, mean value) of each word speech segment and one of a corresponding baseform segment is determined on the basis of correspondence therebetween. The differential is referred to as movement vector hereafter.

The intensity of correspondence between each label and each segment is on the other hand determined as the probability of producing that segment under a condition of that label. Then a code vector corresponding to each label is adapted by summing movement vectors each determined for the segments with those conditional probabilities used as weights, as described in Equation (1).

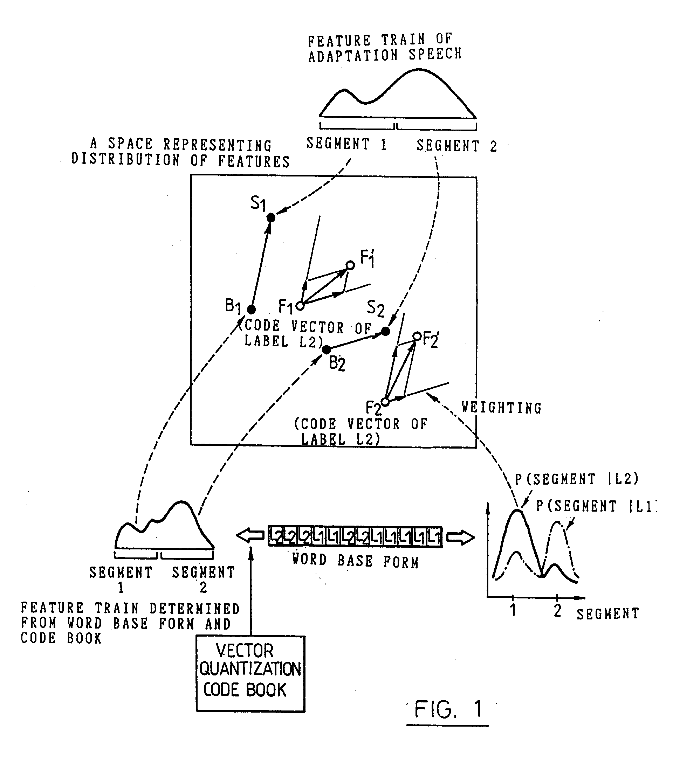

An outline of a series of operations of a speech recognition system is shown in Figure 1 with regard to an example where the number of words used for the process of adaptation of the system is 1, the number of segments produced by dividing is 2 and the number of labels is 2. Here, $i (1 \leq i \leq W)$ is a word number; $j (1 \leq j \leq N)$, the segment number; $S_{ij}$ is an average vector of the features of the speech used for the adaptation process for the word $i$ and the segment $j$; $B_{ij}$ is an average feature vector estimated by the word baseform and the quantization code book; $F_k$ is a code vector corresponding to the label number $k$; $F_k'$ is a code vector after the adaptation; and $P(i,j\ L_k)$ is the probability of producing $L_k$ under the condition for the word $i$ and the segment $j$.

$$F_k' = F_k + \sum_{ij}^{WN} P(i,j\ L_k) \cdot \{S_{ij} - B_{ij}\} \quad \dots \quad \text{Equation (1)}$$

Here, the probability $P(i,j\ L_k)$ of each segment producing a particular label is determined by first obtaining the probability of producing that label in each segment of a word baseform, and then transforming based on Bayes theorem. Further, the frequency of production of a particular label in each segment, as described in Equation (2), can be smoothed, that is a measured frequency of production of a particular label in each segment is smoothed by using label output probabilities of Phenonic Markov models. Here $M_k$ is a state (Phenon) of a Phenonic Markov model, which corresponds to a label $L_k$; $P(L_k\ M_i)$ indicates the probability of the model producing a label output.

$$P(L_k\ i,j) = \sum_{l} P(L_k\ M_l) \cdot P(M_l\ i,j) \quad \dots \quad \text{Equation (2)}$$

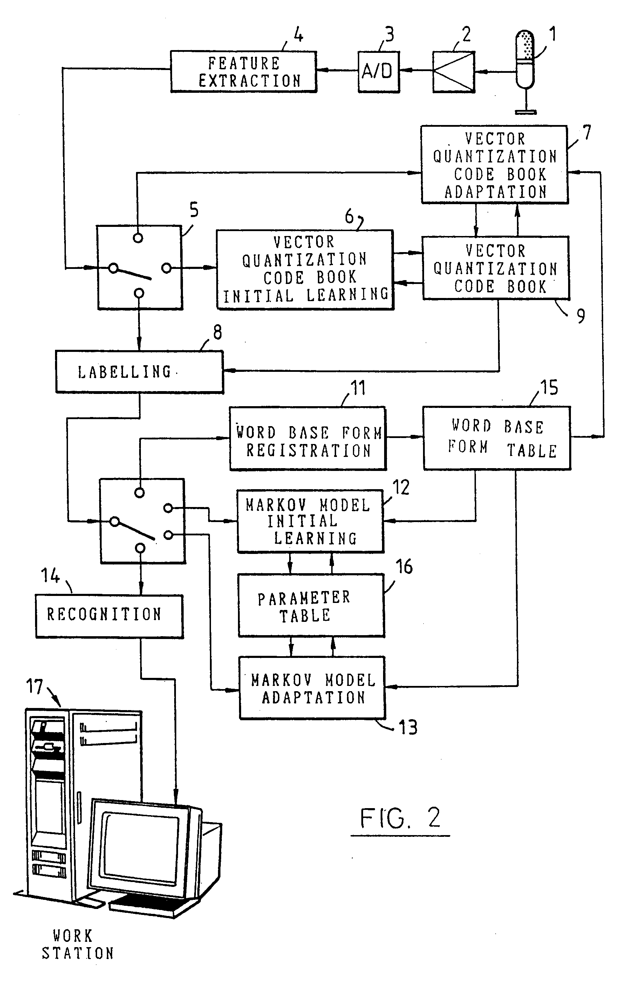

A speech recognition system in which the word speech recognition is based upon the Phenonic Markov model will row be described below with reference to the drawings. Figure 2 shows the system as a whole. In Figure 2, input speech data is supplied through a microphone 1 and an amplifier 2 to an analog to digital (A/D) converter 3 where it is converted into digital data. The digitized speech data is fed to a feature extraction device 4. In this feature extraction device 4, after discrete Fourier transforming, the speech data is extracted as the output of the critical band-pass filter of 20 channels reflecting the auditory sense characteristic.

This output is supplied to an exchanging device 5 on the next stage for each 8 msec and is sent to either a vector quantization code book initial learning device 6, or a vector quantization code book adaptation device 7, or a labelling device 8. For a period of time during which the initial learning of the vector quantization code book takes place, the exchanging device 5 connects its input to the output terminal leading to the code book initial learning device 6 to supply the output of the critical band-pass filter in device 4 to the initial learning device 6. The initial learning device 6 prepares the vector quantization code book 9 comprising 128 code vectors by means of clustering.

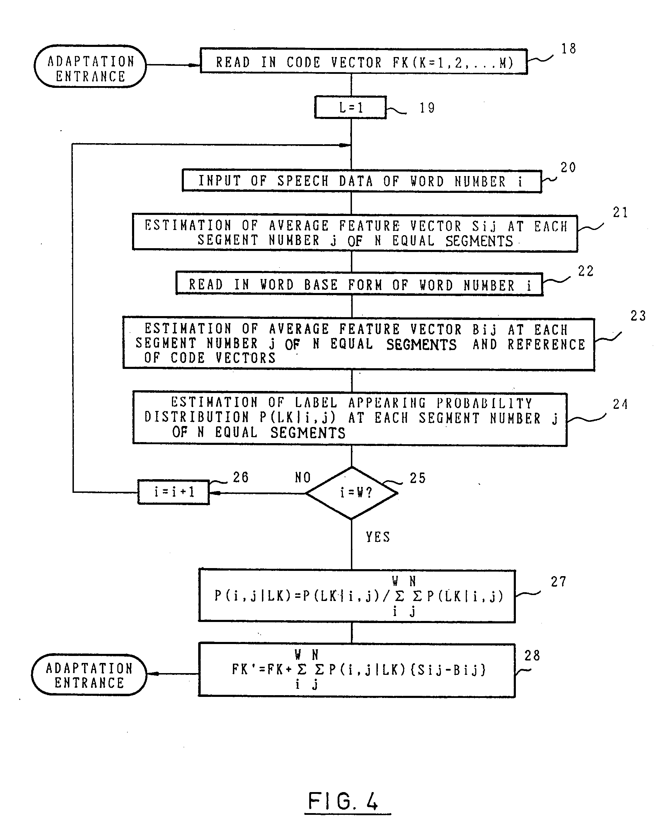

For a period of time during which the adaptation of the code book takes place, the exchange device 5 connects its input to the output terminal leading to the adaptation device 7 where the vector quantization code book 9 after the period of the initial learning is used as the initial value and the adaptation of the code book is performed by referring to a word baseform table 15 which will be explained later. The adaptation device 7 will be described in greater detail later with reference to Figure 4.

For a further period of time during which recognition, registration of the word baseform and initial training and adaptation of Markov model all take place, the exchange device 5 connects its input to the terminal leading to the labelling device 8 where the labelling is performed by referring to the vector quantization code book 9. Here, for the initial learning of the Markov model, the vector quantization code book after the period of initial learning is employed.

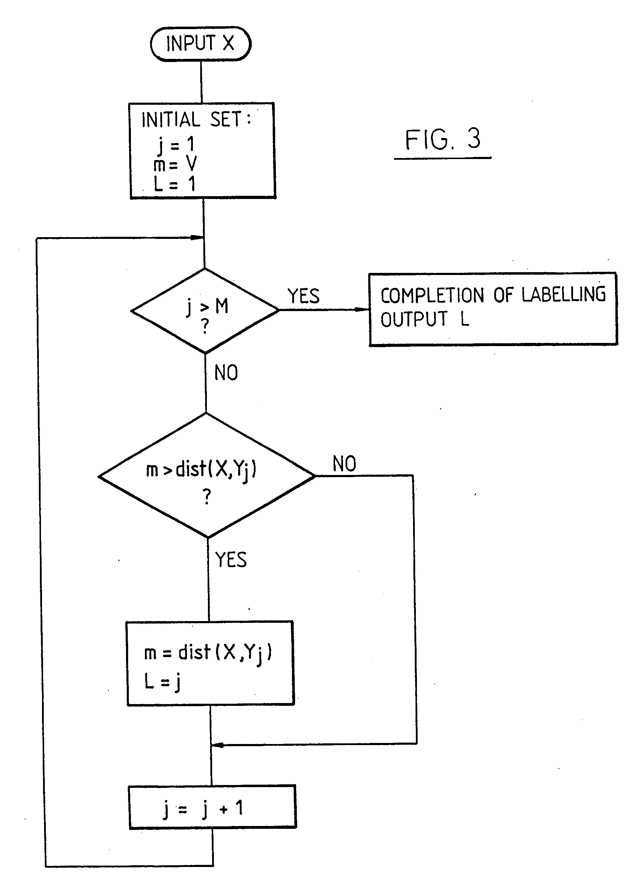

The labelling is carried out, for example, as shown in Figure 3. In Figure 3, X designates an input feature quantity; $Y_j$, the j-th label feature quantity (code vector); M, the number of code vectors ( = 128); disc (X,Y), a Euclid distance between X and $Y_j$; and m, the minimum value of dist (X,Y) up to each time point. The initial value of m is set to a large value V. As will be apparent from Figure 3, the input feature quantity X is compared with each of the code vectors in succession and the most similar, that is the one resulting in the smallest Euclid distance, is represented in the output signal as the observed label (label number) L.

Returning to Figure 2, the label train in the labelling device 8 is supplied through the exchanging device 10 to either a word baseform registration device 11, a Markov model initial learning device 12, a Markov model adaptation device 13 or a recognition device 14.

For a period of time during which word baseform registration takes place, the exchanging device 10 connects its input to the output terminal leading to the word baseform registration device 11 to supply the label train to the word baseform registration device 11. The word baseform registration device 11 prepares a word baseform table 15 by using the label train.

For another period of time during which the initial learning of the Markov model takes place, the exchanging device 10 connects its input to the output terminal leading to the initial learning device 12 to supply the label train to the initial learning device 12. The initial learning device 12 performs the model learning operation by using the label train and the baseform table 15 and determines the parameter values of a parameter table 16.

For a further period of time during which the adaptation takes place, the exchanging device 10 connects its input to the output terminal leading to the adaptation device 13 where the parameter value of the parameter table 16 is adapted using the correspondence relationship between the input label train and each Phenonic Markov model on the word baseform.

For a final period of time during which recognition takes place, the exchanging device 10 connects its input to the output terminal leading to the recognition device 14 where the input speech is recognized based upon the input label train, the word baseform and the parameter table.

The output of the recognition device 14 is fed to the workstation 17 of a data processing system and displayed, for example, on a display device. In Figure 2, all devices except for the microphone 1, the amplifier 2 and the display device 17 are provided in the workstation in the form of software (programs). The 5570 processing device of International Business Machines Corporation, with Japanese DOS and C language and macro assembler were used as the workstation, operation system and language, respectively. These may, of course, alternatively be implemented in the form of hardware.

The operation of the vector quantization code book adaptation device 7 will be explained with reference to Figure 4 which represents the procedure or the code book adaptation. The code vector $F_k$ corresponding to each label $L_k$ is read out from the vector quantization code book (step 18). Then, the speech data of the adaptation learning word i is inputted (step 20). This speech data is divided into N equal segments on the time axis and the average feature vector $S_{ij}$ in each segment j is evaluated (step 21). The baseform of the word number i is read out for the word baseform (step 22). This word baseform is also divided into a quantity of N equal segments on the time axis, and the average feature vector $B_{ij}$ in each segment j is estimated by referring to the read out code vector in the step 18 (step 23). The appearing occurrence rate $P(L_k \ i,j)$ of the label $L_k$ in each segment j is estimated from the quantity of N equal segments of the word baseforms (step 24).

After performing the operations of steps 20 - 24 for the whole of the adaptation learning vocabulary, P-$(L_k \ i,j)$ is converted and the probability $P(i,j \ L_k)$ of the word appearing with the label condition and the segment is calculated (step 27). Then, in accordance with Equation (1), all code vectors $F_k$ are adapted and the existing vector quantization code book is replaced with this adapted code vector (step 28).

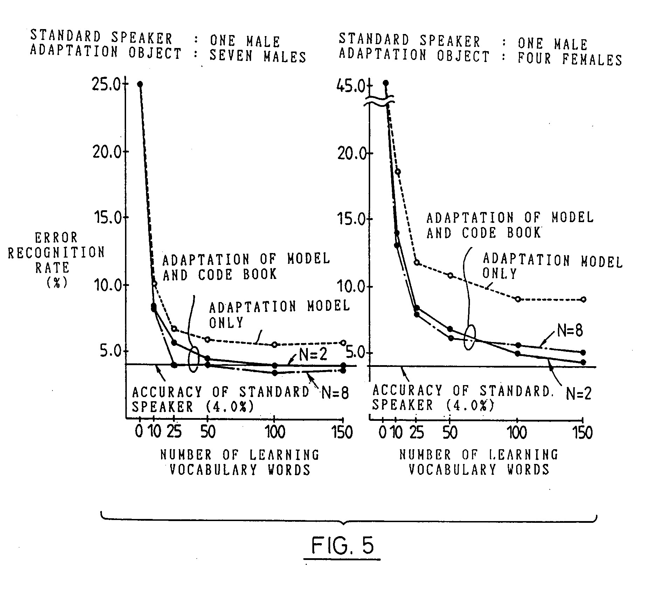

An evaluation experiment was carried out for the above described speech recognition system using 150 highly similar Japanese words such as "Keihoh, Heihoh, Chokusen, Chokuzen" as the vocabulary to be recognized. In this experiment, as the initial speech data for the learning operation of the vector quantization code book and Markov model 150 words uttered by one male speaker ten times were used and the adaptation effect was observed for another 11 speakers (seven males and four females). The adaptation

6

operation was carried out for a part 10, 25, 50, 100 and 150 words with one utterance of each ward) of the objective vocabulary and the recognition experiment was carried out using 150 words uttered by each speaker three times. Figure 5 shows a recognition experimental result wherein the horizontal axis designates the number of the adaptation learning words and the vertical axis designates the average error recognition rate. White circles show the results where only the Markov model is adapted, while black circles show the results where the function of the above described recognition system were performed invention was applied together with the adaptation of Markov models. The solid line at 4% on the vertical axis is the recognition experimental result for the initially learned speaker. From this result, it is understandable that, using the function of the above described recognition system, the same recognition accuracy as that for the initially learned speaker may be obtained for the male speakers by learning the 25 words once. It is also clear that the recognition system described gives almost the same accuracy as that for the initially learned speaker even with the adaptation of only the Markov model between the male and female causing an approximate 10% error due to the drastic changes of the feature quantity, even with 150 words of learning.

The speech recognition system described above may be implemented on a small-sized data processing device with the small calculation function necessary for the adaptation, and a small capacity memory.

## Claims

1. A speech recognition system comprising means (4) for performing a frequency analysis of an input speech in a succession of time periods to obtain feature vectors, means (8) for producing a corresponding label train using a vector quantization code book (9), means (11) for matching a plurality of word baseforms, expressed by a train of Markov models each corresponding to labels, with said label train, means (14) for recognizing the input speech on the basis of the matching result, and means for performing an adaptation operation on said system to improve its ability to recognise speech,

characterised in that said means for performing an adaptation operation comprises

means (4) for dividing each of a plurality of input speech words into N segments (N being an integer number greater than or equal to 1) and producing a representative value of the feature vector of each segment of each input speech word,

means for dividing into segments word baseforms each corresponding to one of said input speech words and for producing a representative value of each segment feature vector of each word baseform on the basis of a prototype vector of said vector quantization code book,

means for producing a movement vector indicating the distance between a representative value of each segment of each input speech word and a representative value of the corresponding segment of the corresponding word baseform,

means for developing the degree of relation between each segment of each input speech word and each label in the label group of the vector quantization code book based upon:

$$P(L_k \; i,j) = \Sigma P(L_k \; M_1) \bullet P(M_1 \; i,j)$$

where $P(L_k \; i,j)$ is the degree of relation between the segment j of the input speech word for the word i and the label $L_k$ in the label group of the vector quantization code book; $P(L_k \; M_1)$ is the output probability of the label $L_k$ in Markov model $M_1$; and $P(M_1 \; i,j)$ is the producing probability of Markov model $M_1$, in the segment j of the word i,

means for storing the degree of relation between each segment of each input speech word and each label in a label group of the vector quantization code book,

prototype adaptation means for correcting a prototype vector of each label in the label group of said vector quantization code book by each movement vector in accordance with the degree of relation between the label and the movement vector, and

means in said prototype adaptation means for developing each label prototype vector in a label group of said vector quantization code book based upon:

$$F_k' = F_k + \sum_i^W \sum_j^N P(i,j \; L_k) \cdot (S_{ij} - B_{ij})$$

where $F_k$, is a prototype vector before the correction of the label $L_k$; $L_k'$ is a prototype vector after the correction of the label $L_k$; $S_{ij}$ is a representative value of the feature vector in the segment j of the word input speech for the word i; and $B_{ij}$ is a representative vector in the segment j of the word baseform for the word i.

2. A speech recognition system as claimed in claim 1 characterised in that the representative value of each segment feature vector of each input speech word is an average value of the feature vector in the segment.

3. A speech recognition system as claimed in claim 1 characterised in that the representative value of each segment feature vector of each word baseform is an average value of the prototype vectors of the labels in the segment.

**Patentansprüche**

1. Ein Spracherkennungssystem, das folgendes umfaßt: Mittel (4) zur Durchführung einer Frequenzanalyse bei einer Spracheingabe in einer Abfolge von zeitlichen Perioden zur Erfassung von Merkmalvektoren, Mittel (8) zur Erzeugung einer entsprechenden Label-Folge unter Verwendung eines Vektorquantisierungscodebuchs (9), Mittel (11) zum Abgleich mehrerer Wort-Grundformen, ausgedrückt als eine Folge von Markov-Modellen, die jeweils Labels entsprechen, mit der Label-Folge, Mittel (14) zur Erkennung der Spracheingabe anhand des Ergebnisses des Abgleichvorgangs und Mittel zur Durchführung einer Anpassungsoperation bei dem System, mit der dessen Fähigkeit zur Spracherkennung verbessert wird,
dadurch gekennzeichnet, daß das Mittel zur Durchführung der Anpassungsoperation folgendes umfaßt:
Mittel (4) zur Aufteilung jedes einzelnen einer Mehrzahl von Spracheingabewörtern in N Segmente (wobei N eine Ganzzahl größer oder gleich 1 ist) und zur Erzeugung eines Repräsentativwertes für den Merkmalvektor der einzelnen Segmente jedes Spracheingabewortes,
Mittel zur Aufteilung von Wort-Grundformen in Segmente, wobei jedes einem der Spracheingabewörter entspricht, und zur Erzeugung eines Repräsentativwertes für die einzelnen Segment-Merkmalvektoren jeder Wort-Grundform anhand eines Prototypvektors des Vektorquantisierungscodebuchs,
Mittel zur Erzeugung eines Bewegungsvektors, der den Abstand zwischen einem Repräsentativwert für jedes Segment der einzelnen Spracheingabewörter und einem Repräsentativwert des entsprechenden Segments der entsprechenden Wort-Grundform angibt,
Mittel zur Entwicklung des Relationsgrades zwischen den einzelnen Segmenten jedes Spracheingabewortes und den einzelnen Labels in der Label-Gruppe des Vektorquantisierungscodebuchs auf Basis von

$$P(L_k \ i,j) = SP(L_k \ M_1).P(M_1 \ i,j)$$

wobei $P(L_k \ i,j)$ den Relationsgrad zwischen dem Segment j des Spracheingabewortes für das Wort i und dem Label $L_k$ in der Label-Gruppe des Vektorquantisierungscodebuchs bezeichnet; $P(L_k M_1)$ die Ausgabewahrscheinlichkeit für das Label $L_k$ im Markov-Modell $M_1$ ist und $P(M_1 \ i,j)$ die Wahrscheinlichkeit des Auftretens des Markov-Modells $M_1$ im Segment j des Wortes i,
Mittel zur Speicherung des Relationsgrades zwischen den einzelnen Segmenten jedes Spracheingabewortes und den einzelnen Labels einer Label-Gruppe im Vektorquantisierungscodebuch,
Prototyp-Anpassungsmittel zur Korrektur eines Prototypvektors für die einzelnen Labels in der Label-Gruppe des Vektorquantisierungscodebuchs durch die einzelnen Bewegungsvektoren entsprechend dem Relationsgrad zwischen dem Label und dem Bewegungsvektor und
Mittel in diesem Protoyp-Anpassungsmittel zur Entwicklung der einzelnen Label-Prototypvektoren in einer Label-Gruppe des Vektorquantisierungscodebuchs auf Basis von

$$F_k' = F_k + \sum_{ij}^{WN} SP(i,j \ L_k).(S_{ij} - B_{ij})$$

wobei $F_k$ ein Prototypvektor vor der Korrektur des Labels $L_k$ ist, $F_k'$ ein Prototyp-Vektor nach der Korrektur des Labels $L_k$, $S_{ij}$ ein Repräsentativwert für den Merkmalvektor im Segment j der Wort-Spracheingabe für das Wort i und $B_{ij}$ ein Repräsentativvektor im Segment j der Wort-Grundform für das Wort i.

2. Ein Spracherkennungssystem nach Anspruch 1, dadurch gekennzeichnet, daß der Repräsentativwert für jeden Segmentmerkmalvektor jedes einzelnen Spracheingabewortes einen Mittelwert des Merkmalvektors in dem Segment bildet.

3. Ein Spracherkennungssystem nach Anspruch 1, dadurch gekennzeichnet, daß der Repräsentativwert für jeden Segmentmerkmalvektor jeder einzelnen Wort-Grundform einen Mittelwert der Prototypvektoren der Labels in dem Segment bildet.

## Revendications

1. Système de reconnaissance vocale comprenant un dispositif (4) pour exécuter une analyse de fréquence de données vocales en entrée suivant une série d'intervalles de temps afin d'obtenir des vecteurs-caractéristiques, comprenant un dispositif (8) pour produire un train correspondant d'étiquettes sur la base d'un livre de codes de quantification vectorielle (9), un dispositif (11) pour mettre en concordance une pluralité de formes de base de mots - exprimées par un train de modèles de Markov correspondant chacun à une étiquette - avec ledit train d'étiquettes, un dispositif (14) pour reconnaître les données vocales en entrée sur la base du résultat de la mise en concordance, et un dispositif pour exécuter une opération d'adaptation sur le système afin d'optimiser sa capacité de reconnaissance vocale,

caractérisé en ce que ledit dispositif qui permet d'exécuter une opération d'adaptation comprend

un dispositif (4) pour diviser chaque mot d'une pluralité de mots vocaux d'entrée en N segments (N étant un nombre entier supérieur ou égal à 1) et pour produire une valeur représentative du vecteur-caractéristique de chaque segment de chaque mot vocal en entrée;

un dispositif pour diviser en segments les formes de base de mots correspondant chacune à l'un des mots vocaux en entrée et pour produire une valeur représentative de chaque vecteur-caractéristique de segment de chaque forme de base de mot sur la base d'un vecteur-prototype du livre des codes de quantification vectorielle;

un dispositif pour produire un vecteur de transfert indiquant la distance entre une valeur représentative de chaque segment de chaque mot vocal en entrée et une valeur représentative du segment correspondant de la forme de base de mot correspondante;

un dispositif pour développer le degré de relation entre chaque segment de chaque mot vocal en entrée et chaque étiquette du groupe d'étiquettes du livre des codes de quantification vectorielle, sur la base de l'équation :

$$P(L_k\ i,j) = \Sigma P(L_k\ M_1).P(M_1\ i,j)$$

où $P(L_k\ i,j)$ est le degré de relation entre le segment j du mot vocal en entrée pour le mot i et l'étiquette $L_k$ du groupe de labels du livre des codes de quantification vectorielle; $P(L_k\ M_1)$ est la probabilité de production de l'étiquette $L_k$ en sortie dans le modèle de Markov $M_1$ ; et $P(M_1\ i,j)$ est la probabilité de production du modèle de Markov $M_1$ dans le segment j du mot i;

un dispositif pour enregistrer le degré de relation entre chaque segment de chaque mot vocal en entrée et chaque étiquette du groupe d'étiquettes du livre des codes de quantification vectorielle;

un dispositif d'adaptation de prototype pour corriger un vecteur-prototype de chaque étiquette du groupe d'étiquettes du livres des codes de quantification vectorielle selon chaque vecteur de transfert en fonction du degré de relation entre l'étiquette et le vecteur de transfert; et

un dispositif dans ledit dispositif d'adaptation de prototype pour développer chaque vecteur-prototype dans un groupe d'étiquettes du livres des codes de quantification vectorielle, sur la base de l'équation :

$$F_k{}' = F_k + \overset{WN}{\underset{i\ \ j}{\Sigma\Sigma}}\ P(i,j\ L_k)\ .\ (S_{ij} - B_{ij})$$

où $F_k$ est un vecteur-prototype avant la correction de l'étiquette $L_k$; $F_k'$ est un vecteur-prototype après la correction de l'étiquette $L_k$; $S_{ij}$ est une valeur représentative du vecteur-caractéristique dans le segment j du mot vocal en entrée pour le mot i; et $B_{ij}$ est un vecteur représentatif dans le segment j de la forme de base de mot pour le mot i.

2.  Système de reconnaissance vocale selon la revendication 1 caractérisé en ce que la valeur représentative de chaque vecteur-caractéristique de segment de chaque mot vocale en entrée est une valeur moyenne du vecteur-caractéristique du segment.

3.  Système de reconnaissance vocale selon la revendication 1 caractérisé en ce que la valeur représentative de chaque vecteur-caractéristique de segment de chaque forme de base de mot est une valeur moyenne des vecteurs-prototypes des étiquettes du segment.

FIG. 1

FIG. 2

FIG. 3

ADAPTATION ENTRANCE → READ IN CODE VECTOR FK(K=1,2,...M) ~ 18

L=1 ~ 19

INPUT OF SPEECH DATA OF WORD NUMBER i ~ 20

ESTIMATION OF AVERAGE FEATURE VECTOR Sij AT EACH SEGMENT NUMBER j OF N EQUAL SEGMENTS ~ 21

READ IN WORD BASE FORM OF WORD NUMBER i ~ 22

ESTIMATION OF AVERAGE FEATURE VECTOR Bij AT EACH SEGMENT NUMBER j OF N EQUAL SEGMENTS AND REFERENCE OF CODE VECTORS ~ 23

ESTIMATION OF LABEL APPEARING PROBABILITY DISTRIBUTION P(LK|i,j) AT EACH SEGMENT NUMBER j OF N EQUAL SEGMENTS ~ 24

i=i+1 ~ 26    NO    i=W? ~ 25

YES

$$P(i,j|LK)=P(LK|i,j)/\sum_i^W \sum_j^N P(LK|i,j)$$ ~ 27

$$FK'=FK+\sum_i^W \sum_j^N P(i,j|LK)(Sij-Bij)$$ ~ 28

ADAPTATION ENTRANCE

FIG. 4

FIG. 5